# FASCICULE DE BREVET EUROPEEN

(11) **EP 2 204 113 B1**
(45) Date de publication et mention de la délivrance du brevet: **05.10.2011**
(21) Numéro de dépôt: 09306307.1
(22) Date de dépôt: 22.12.2009
(51) Int. Cl.: A47J 27/08, A47J 27/09

(54) **Autocuiseur avec bilame de purge encapsulé**
Schnellkochtopf mit eingekapseltem Ablassventil mit Bimetallelement
Pressure cooker with encapsulated purging thermal switch

(30) Priorité: 31.12.2008 FR 0859161; 19.06.2009 FR 0954203
(43) Date de publication de la demande: 07.07.2010
(73) Titulaire: SEB S.A., 69130 Ecully (FR)
(72) Inventeur: Cartigny, Michel, Pierre, 21310 Mirebeau sur Beze (FR); Murat, Pascal, 21121 Fontaine les Dijon (FR)
(74) Mandataire: Martin, Didier Roland Valéry

(56) Documents cités:
- EP-A- 1 008 320
- EP-A- 1 277 427
- WO-A-2009/015529
- DE-A1- 10 347 018
- DE-A1-102007 056 716
- DE-U1- 9 101 769
- FR-A- 2 585 229

## Description

La présente invention se rapporte au domaine général des appareils de cuisson sous pression, et plus particulièrement des appareils de cuisson domestiques de type autocuiseurs.

Plus particulièrement, la présente invention se rapporte à un appareil de cuisson d'aliments sous pression comprenant une cuve ainsi qu'un couvercle conçu pour être fixé sur ladite cuve de sorte à définir une enceinte sensiblement étanche destinée à contenir les aliments, ledit appareil étant pourvu :
- d'un moyen de purge permettant l'évacuation de l'air hors de l'enceinte au début de la cuisson, ledit moyen de purge comprenant un orifice de fuite reliant l'intérieur de l'enceinte à l'extérieur de l'appareil ainsi qu'un organe obturateur coopérant avec ledit orifice de fuite pour permettre au moyen de purge d'adopter alternativement une configuration d'ouverture, dans laquelle il assure la communication entre l'intérieur de l'enceinte et l'extérieur de l'appareil et autorise la fuite d'un flux gazeux en provenance de ladite enceinte, et une configuration de fermeture dans laquelle il assure l'étanchéité de l'enceinte,
- d'un moyen de commande conçu pour faire passer le moyen de purge de sa configuration d'ouverture à sa configuration de fermeture lorsque la température ou la pression régnant dans l'enceinte s'élève au-delà d'un seuil de déclenchement prédéterminé.

De manière générale, les autocuiseurs destinés à cuire les aliments dans une atmosphère de vapeur d'eau sous pression comprennent une cuve ainsi qu'un couvercle conçu pour être verrouillé sur ladite cuve de sorte à définir une enceinte de cuisson sensiblement étanche.

Or, après la fermeture de l'autocuiseur, celui-ci renferme une certaine quantité d'air qui, en raison des propriétés d'isolant thermique de ce dernier, est susceptible de retarder et perturber la montée en température et en pression de l'appareil.

C'est pourquoi il est connu, par example par le document EP-1277 427, d'équiper les autocuiseurs de l'art antérieur d'un dispositif de purge qui permet d'évacuer l'air, initialement contenu dans l'enceinte, au début de la phase de cuisson.

A cet effet, il a été imaginé divers mécanismes de purge qui comprennent généralement un orifice de fuite, qui met en communication l'intérieur de l'enceinte avec l'extérieur de l'appareil, ainsi qu'un obturateur coopérant avec ledit orifice de fuite afin de maintenir ce dernier ouvert au début de la cuisson, en deçà d'un seuil de température ou de pression prédéterminé, puis de fermer ledit orifice dès que la pression ou la température de l'enceinte dépasse ledit seuil.

Une fois la purge de l'air effectuée, et le mécanisme de purge refermé, la montée en température et en pression peut se poursuivre jusqu'à atteindre les valeurs nominales de fonctionnement de l'autocuiseur, lesquelles sont généralement régulées par un ou plusieurs dispositifs idoines tels que des soupapes.

Bien qu'ils procurent généralement satisfaction, les dispositifs de purge d'air connus souffrent toutefois de certains inconvénients.

En premier lieu, la nécessité de réguler finement le fonctionnement des mécanismes de purge d'air, de telle sorte que la fermeture de l'enceinte n'intervienne ni trop tôt, alors que l'enceinte contient encore de l'air, ni trop tard, pour ne pas maintenir inutilement un débit de fuite empêchant ou retardant la montée en température et en pression de ladite enceinte, impose la réalisation et l'assemblage particulièrement précis de pièces calibrées, ce qui tend à compliquer le processus de fabrication et à augmenter le coût de l'appareil.

En outre, les conditions particulièrement sévères auxquelles sont exposés les mécanismes de purge peuvent être à l'origine de défaillances desdits mécanismes, par exemple par encrassement, entartrage ou corrosion, de telles défaillances ayant pour effet de réduire les performances de l'appareil, voire d'en limiter sensiblement la longévité.

Les objets assignés à l'invention visent par conséquent à remédier aux inconvénients énumérés précédemment et à proposer un nouvel appareil de cuisson d'aliments sous pression qui présente de bonnes performances, tout en étant particulièrement robuste, fiable et durable.

Un autre objet assigné à la présente invention vise à proposer un nouvel appareil de cuisson d'aliments sous pression qui soit de conception particulièrement simple et compacte.

Un autre objet assigné à l'invention vise à proposer un nouvel appareil de cuisson sous pression dont la fabrication et l'assemblage soient particulièrement simples et peu coûteux.

Enfin, un autre objet assigné à l'invention vise à proposer un nouvel appareil de cuisson sous pression qui présente un bon aspect esthétique et soit d'entretien facile.

Les objets assignés à l'invention sont atteints à l'aide d'un appareil de cuisson d'aliments sous pression comprenant une cuve ainsi qu'un couvercle conçu pour être fixé sur ladite cuve de sorte à définir une enceinte sensiblement étanche destinée à contenir les aliments, ledit appareil étant pourvu :
- d'un moyen de purge permettant l'évacuation de l'air hors de l'enceinte au début de la cuisson, ledit moyen de purge comprenant un orifice de fuite reliant l'intérieur de l'enceinte à l'extérieur de l'appareil ainsi qu'un organe obturateur coopérant avec ledit orifice de fuite pour permettre au moyen de purge d'adopter alternativement une configuration d'ouverture, dans laquelle il assure la communication entre l'intérieur de l'enceinte et l'extérieur de l'appareil et autorise la fuite d'un flux gazeux en provenance de ladite enceinte, et une configuration de fermeture dans laquelle il assure l'étanchéité de l'enceinte,
- d'un moyen de commande conçu pour faire passer le moyen de purge de sa configuration d'ouverture à sa configuration de fermeture lorsque la température ou la pression régnant dans l'enceinte s'élève au-delà d'un seuil de déclenchement prédéterminé,
   ledit appareil étant caractérisé en ce que le moyen de commande comporte un organe d'actionnement solide qui est logé dans une zone de confinement sensiblement étanche apte à isoler ledit organe d'actionnement du flux gazeux provenant de l'enceinte.

D'autres objets, caractéristiques et avantages de l'invention apparaîtront plus en détails à la lecture de la description qui suit, ainsi qu'à l'aide des dessins annexés, fournis à titre purement illustratif et non limitatif, parmi lesquels :
- La figure 1 illustre, selon une vue en perspective éclatée, une première variante de réalisation d'un module de purge comprenant un moyen de purge et un moyen de commande conformes à l'invention.
- La figure 2 illustre, selon une vue en perspective, le module de la figure 1.
- La figure 3 illustre, selon une vue en coupe longitudinale, le module de la figure 1 fixé sur le couvercle d'un appareil de cuisson d'aliments sous pression conforme à l'invention, le moyen de purge se trouvant en configuration d'ouverture.
- La figure 4 illustre, selon une vue en coupe longitudinale, l'appareil de cuisson de la figure 3 avec le moyen de purge en configuration de fermeture.
- La figure 5 illustrée, selon une vue en coupe longitudinale, une seconde variante de réalisation d'un module de purge comprenant un moyen de purge et un moyen de commande conformes à l'invention, avec le moyen de purge en configuration d'ouverture.
- La figure 6 illustre, selon une vue en coupe longitudinale, le module de la figure 5 avec le moyen de purge se trouvant en configuration de fermeture.

La présente invention se rapporte à un appareil de cuisson d'aliments sous pression 1, du genre autocuiseur, destiné à cuire les aliments dans un milieu constitué de vapeur d'eau maintenu à une pression et à une température supérieures à la pression et à la température atmosphériques ambiantes.

Selon l'invention, l'appareil de cuisson 1 comprend une cuve (non représentée), ainsi qu'un couvercle 2 qui est conçu pour être fixé sur ladite cuve de sorte à définir une enceinte 3 sensiblement étanche destinée à contenir les aliments.

A cet effet, ledit couvercle 2 peut être pourvu de moyens de verrouillage de type étriers, mâchoires, baïonnette, ou tout autre système équivalent bien connu de l'homme du métier.

En outre, le couvercle 2 pourra être pourvu d'un ou plusieurs joints d'étanchéité périphérique destinés à assurer son ajustement étanche sur la cuve.

En outre, l'appareil de cuisson 1 conforme à l'invention pourra comprendre un ou plusieurs systèmes de régulation et de sécurité destinés à maintenir la pression régnant dans l'enceinte en deçà d'une valeur de pression maximale prédéterminée.

A cet effet, ledit appareil de cuisson 1 pourra par exemple être pourvu d'une soupape tarée apte à créer une fuite entre l'enceinte et l'atmosphère extérieure en cas d'apparition d'une surpression excessive dans ladite enceinte.

Par ailleurs, l'appareil de cuisson 1 conforme à l'invention est pourvu d'un moyen de purge 4 qui permet l'évacuation de l'air hors de l'enceinte 3 au début de la cuisson.

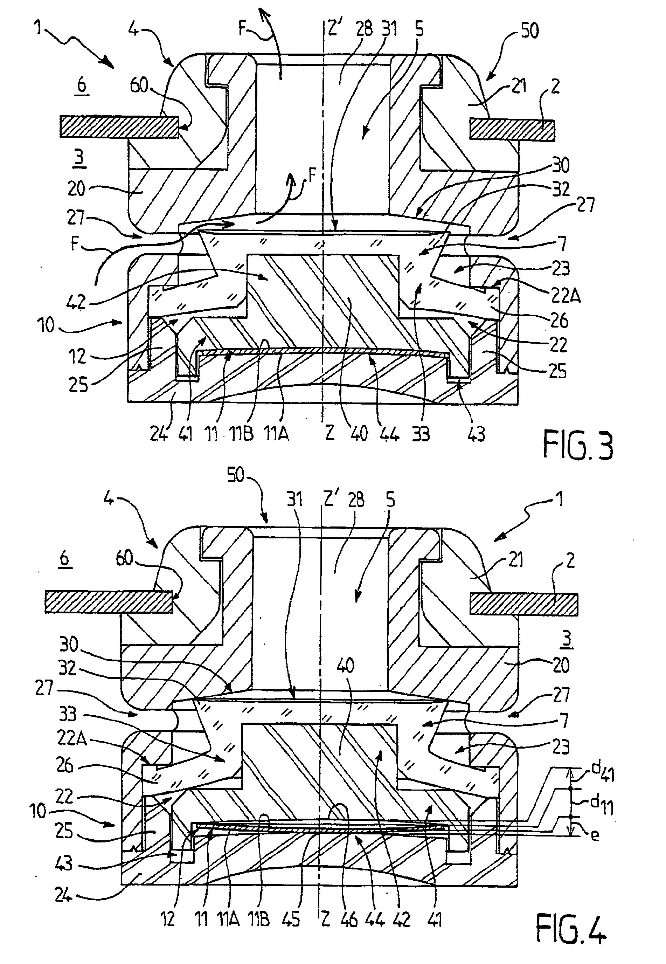

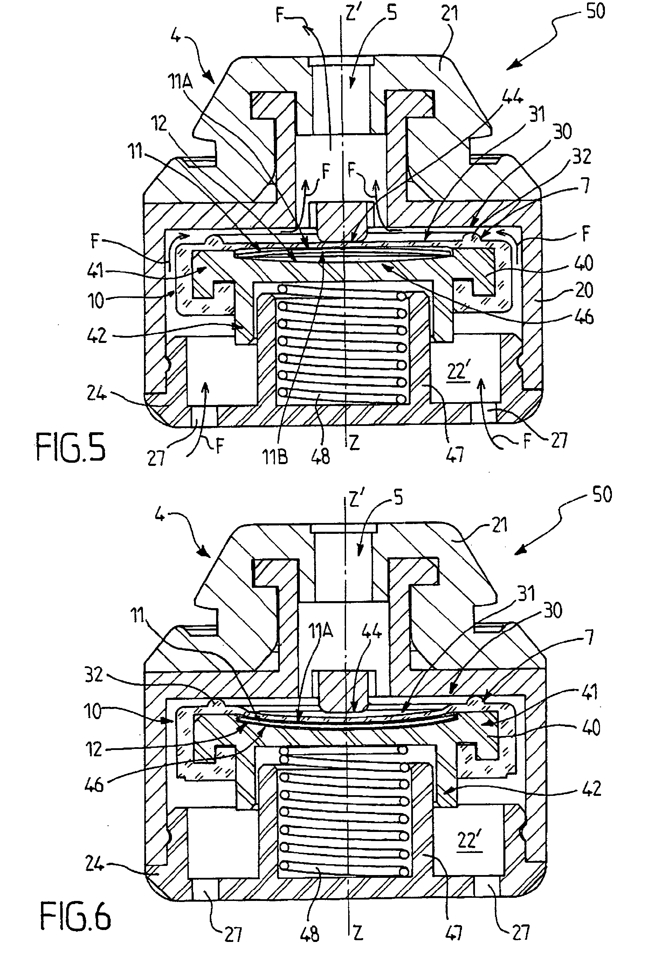

A cet effet, ledit moyen de purge 4 comprend un orifice de fuite 5 qui relie l'intérieur de l'enceinte 3 à l'extérieur 6 de l'appareil, ainsi qu'un organe obturateur 7 qui coopère avec ledit orifice de fuite 5 pour permettre au moyen de purge 4 d'adopter alternativement une configuration d'ouverture, illustrée sur les figures 3 et 5, dans laquelle il assure la communication entre l'intérieur de l'enceinte 3 et l'extérieur 6 de l'appareil et autorise la fuite d'un flux gazeux F en provenance de ladite enceinte 3, et une configuration de fermeture, illustrée sur les figures 4 et 6, dans laquelle il interrompt cette communication afin d'assurer l'étanchéité de l'enceinte 3.

Avantageusement, l'organe obturateur 7 sera conçu pour pouvoir alternativement boucher et dégager l'orifice de fuite 5 selon la configuration de fermeture ou d'ouverture visée, et sera de préférence monté mobile par rapport à l'orifice de fuite 5, lui-même situé en position fixe sur le couvercle 2.

En outre, l'appareil 1 est pourvu d'un moyen de commande 10 qui est conçu pour faire passer le moyen de purge 4 de sa configuration d'ouverture à sa configuration de fermeture lorsque la température T ou la pression P régnant dans l'enceinte 3 s'élève au-delà d'un seuil de déclenchement prédéterminé T₁, P₁, de préférence défini par construction du moyen de commande.

Avantageusement, le moyen de purge 4 constitue un moyen de purge de l'air, qui est calibré pour autoriser au début de la cuisson une certaine montée en température et en pression tout en permettant l'évacuation de l'air qui est initialement enfermé dans l'enceinte lors de la fermeture de l'appareil 1.

En d'autres termes, le moyen de purge 4 maintient une communication entre l'enceinte 3 et l'extérieur 6 entre le moment où l'appareil 1 est fermé à pression atmosphérique et est placé sur la source de chauffe et le moment où la pression ou la température régnant dans l'enceinte atteint le seuil prédéterminé P₁, T₁.

Ainsi, la montée en température et en pression de l'enceinte est réalisée de façon rapide, homogène et fiable, l'air qu'elle contient étant progressivement chassé et remplacé par de la vapeur d'eau.

Ensuite, lorsque la température T ou la pression P régnant dans l'enceinte franchit le seuil prédéterminé T₁, P₁, le moyen de purge 4 passe avantageusement en configuration de fermeture, de telle sorte que la température et la pression régnant dans l'enceinte, désormais étanche et sensiblement purgée de son air, peuvent augmenter jusqu'à atteindre la température et la pression nominales de fonctionnement T₂, P₂.

Bien qu'il soit envisageable que le moyen de commande 10 réagisse à la pression P, celui-ci sera de préférence thermosensible.

Plus particulièrement, la température seuil T₁ à partir de laquelle le moyen de commande 10 déclenche la fermeture du moyen de purge 4 sera de préférence choisie comme sensiblement égale à 100°C +/- 2°C, voire sensiblement comprise entre 96°C et 100°C.

A ce titre, il est remarquable que les valeurs de température de déclenchement susmentionnées s'entendent de valeurs de température effective du mélange gazeux qui est contenu dans l'enceinte, et, le cas échéant, qui s'échappe de cette dernière.

Après la fermeture du moyen de purge, la température nominale de fonctionnement T₂ sera de préférence de l'ordre de 105°C à 120°C.

De préférence, la pression nominale de fonctionnement P₂ correspondra à une surpression de l'ordre de 20 kPa à 120 kPa par rapport à la pression atmosphérique extérieure à l'enceinte.

Selon une caractéristique importante de l'invention, le moyen de commande 10 comporte un organe d'actionnement 11 solide qui est logé dans une zone de confinement 12 sensiblement étanche, laquelle est apte à isoler ledit organe d'actionnement 11 du flux gazeux F provenant de l'enceinte 3.

En d'autres termes, de façon particulièrement avantageuse, l'organe d'actionnement 11 conforme à l'invention est « *encapsulé* » dans une zone de confinement 12 qui est suffisamment étanche pour le séparer du fluide gazeux contenu dans l'enceinte et s'échappant de cette dernière, ledit fluide gazeux contenant essentiellement de l'air et/ou de la vapeur d'eau, de telle sorte que ledit organe d'actionnement 11 est protégé des agressions physico-chimiques dudit fluide gazeux.

Ainsi, le moyen de commande 10 conforme à l'invention est rendu quasiment insensible à la corrosion, à l'encrassement ou à l'entartrage, ce qui limite considérablement les risques de défaillance mécanique dudit moyen de commande 10, liés par exemple au dérèglement de son seuil de déclenchement ou de la course de ses éventuelles pièces mobiles.

Par conséquent, l'appareil de cuisson 1 conforme à l'invention présente de bonnes performances, notamment énergétiques, puisqu'il permet de purger efficacement l'air et ainsi d'accélérer l'amenée en température et en pression de fonctionnement, et possède en outre une fiabilité accrue en raison de la robustesse du moyen de purge 4 et du moyen de commande 10 qui lui est associé.

De surcroît, la séparation de l'organe d'actionnement 11 et du flux gazeux F, et, plus globalement, de l'atmosphère qui règne dans l'enceinte, permet d'éviter toute pollution de l'atmosphère de cuisson et des aliments par les organes constitutifs du moyen de commande 10, ce qui garantit durablement la qualité alimentaire de l'appareil.

Le cas échéant, une telle séparation permet même d'envisager l'emploi d'un organe d'actionnement réalisé dans un matériau n'étant pas lui-même de qualité alimentaire.

Avantageusement, l'utilisation d'un organe d'actionnement 11 solide, c'est-à-dire ni liquide, ni gazeux, sera préférée à celle d'un moyen hydraulique ou pneumatique.

En effet, l'utilisation d'un fluide en tant que moyen d'actionnement pourrait présenter plusieurs inconvénients, liés d'une part à la complexité de fabrication et de mise en oeuvre des moyens de stockage et de transport dudit fluide, et d'autre part au risque de fuite ou d'éclatement, donc de défaillance du moyen de commande et/ou de contamination des aliments, lié à l'exposition dudit fluide à des températures et pressions élevées.

En outre, l'utilisation d'un organe d'actionnement solide très peu sensible à la pression permet d'assurer par exemple un asservissement (ouverture/fermeture) du moyen de purge en fonction de la température qui soit particulièrement fin, précis et reproductible.

Bien entendu, l'organe d'actionnement 11 n'est nullement limité à une variante particulière de réalisation, et peut notamment comporter tout type de mécanisme apte à générer, transférer, réduire ou amplifier un mouvement, et comportant par exemple des ressorts, engrenages, leviers, bielles, mécanismes magnétiques ou électromagnétiques, etc.

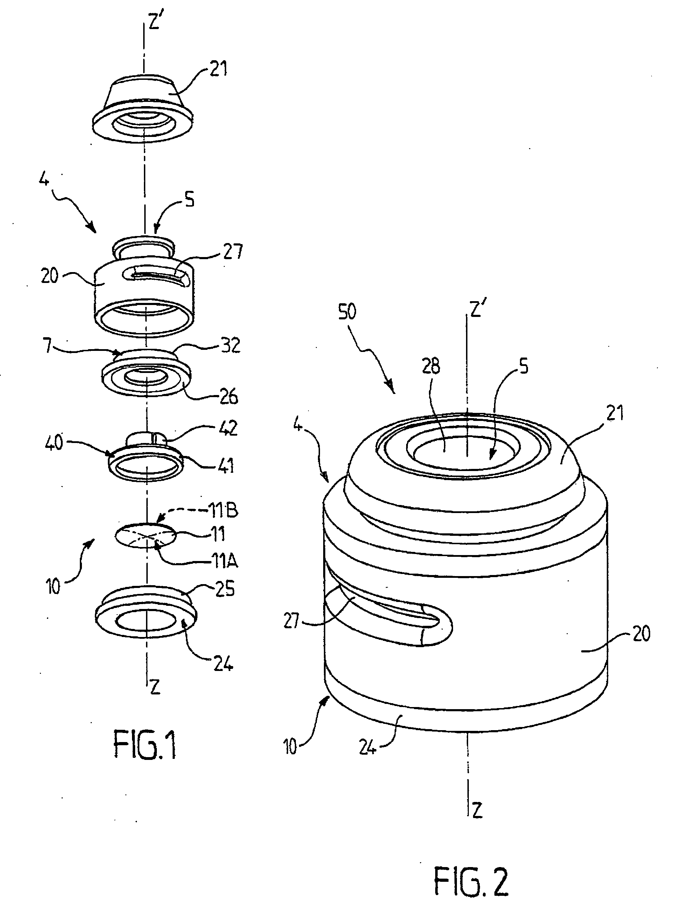

Toutefois, selon une variante de réalisation préférentielle particulièrement simple correspondant aux figures 1 à 4, l'organe d'actionnement 11 est formé par un bilame.

De préférence, ledit bilame est métallique, et conçu pour se déformer, de préférence en flexion, sous l'effet de la chaleur régnant dans l'enceinte.

Ainsi, l'organe d'actionnement 11 constitue préférentiellement un organe moteur thermosensible, qui provoque l'obstruction de l'orifice de fuite 5 par l'organe obturateur 7 lorsqu'il est soumis à, ou détecte, une température supérieure ou égale au seuil de température T₁.

A ce titre, il est remarquable que, dans la mesure où l'organe d'actionnement 11 est logé dans la zone de confinement 12 et perçoit par conséquent indirectement la température T du mélange gazeux contenu dans l'enceinte, l'homme du métier prendra naturellement en considération l'éventuel effet d'isolation thermique produit par la zone de confinement pour déterminer la température effective du bilame à laquelle ce dernier doit changer de configuration. En pratique, selon la nature et l'épaisseur des matériaux employés pour le séparer du flux gazeux F, ledit bilame pourra être conçu pour être activé lorsqu'il est porté à une température inférieure de 10°C environ au seuil de déclenchement T₁ choisi.

De façon particulièrement préférentielle, tel que cela est illustré notamment sur la figure 1, l'organe d'actionnement 11, et plus particulièrement le bilame, se présente sous la forme d'une plaque bombée bistable dont la courbure s'inverse sensiblement lors du franchissement du seuil de déclenchement T₁, P₁.

En d'autres termes, le bilame est de préférence conçu pour « *cloquer* », c'est-à-dire pour se déformer de sorte à passer alternativement d'une forme « *au repos »* concave (considérée ici depuis l'intérieur de la cuve) et stable, qu'il occupe lorsque le moyen de purge 4 se trouve en configuration d'ouverture, tel que cela est illustré sur la figure 3, à une forme « *active* » convexe et stable dans laquelle il fait passer - et maintient - le moyen de purge 4 en configuration de fermeture, tel que cela est illustré sur la figure 4.

Dans ce qui suit, on assimilera par commodité de description l'organe d'actionnement 11 à un bilame se présentant sous la forme d'une plaque bombée bistable, sans que cela ne constitue une restriction de l'invention.

De préférence, l'organe d'actionnement 11, et plus globalement le module 50 formé par le sous-ensemble comportant le moyen de purge 4 et le moyen de commande 10 qui lui est associé, présentent sensiblement une géométrie de révolution d'axe (ZZ'), ledit axe (ZZ') étant de préférence sensiblement parallèle à l'axe vertical de l'appareil 1 lorsque ce dernier est en service.

Ainsi, le bilame 11 présentera de préférence une forme discoïde, rappelant une coupelle.

Selon une variante de réalisation particulière qui peut également constituer une invention à part entière, l'organe obturateur 7 forme également une paroi étanche qui délimite au moins en partie la zone de confinement 12.

En d'autres termes, un seul et même organe, en l'occurrence l'organe obturateur 7, sert à la fois de clapet ouvrant ou fermant le moyen de purge 4 et de cloison étanche séparant le flux gazeux F de l'organe d'actionnement 11.

De façon particulièrement préférentielle, l'organe obturateur 7 est à cet effet formé par une membrane élastique.

En d'autres termes, on met avantageusement à profit l'aptitude à la déformation élastique et les propriétés d'étanchéité de l'organe obturateur 7 pour utiliser ce dernier à la fois comme un joint « *statique* » formant une barrière d'isolement qui protège l'organe d'actionnement 11 du flux gazeux F, et comme effecteur élastiquement mobile apte à faire obstacle à l'écoulement du flux gazeux F au sein du moyen de purge 4.

L'appareil 1 conforme à l'invention, et plus particulièrement le module 50, présentent ainsi avantageusement une structure particulièrement simplifiée et compacte qui contribue à limiter leur coût de fabrication.

De préférence, le moyen de purge 4 comporte un corps principal 20 dans lequel est percé l'orifice de fuite 5, ledit corps principal 20 étant avantageusement coiffé d'un joint de montage 21 tronconique qui permet la fixation dudit corps principal 20 sur le couvercle 2, par exemple par emmanchement dudit joint de montage à travers une ouverture 60 pratiquée dans ledit couvercle.

A ce titre, il est remarquable qu'un tel joint de montage 21 permet d'adapter facilement le moyen de purge conforme à l'invention sur tout type d'autocuiseur et/ou de remplacer uniquement le module 50 en cas de défaillance de ce dernier.

De préférence, selon la première variante de réalisation illustrée sur les figures 1 à 4, le corps principal 20 présente une chambre 22 contiguë à l'orifice de fuite 5 et s'ouvrant sur ce dernier par une fenêtre 23, ladite chambre présentant au niveau de ladite fenêtre 23 un épaulement 22A contre lequel l'organe obturateur 7 est rapporté et maintenu de manière étanche, en faisant saillie par la fenêtre 23.

En outre, le module 50 comporte de préférence un capuchon 24 rapporté sur le corps principal 20.

Selon la première variante de réalisation, l'organe obturateur 7 est maintenu au moyen dudit capuchon 24 fixé sur ledit corps principal 20, par exemple par soudage aux ultrasons.

A cet effet, l'organe obturateur 7 peut présenter une portion d'assise en forme de collerette 26 dont la face supérieure vient buter contre l'épaulement 22A et dont la face inférieure est comprimée axialement par une couronne 25 formant une extension annulaire du capuchon 24 en saillie dans la chambre 22.

Ainsi, l'intérieur de la chambre 22, qui est venue de matière avec le corps principal et délimitée d'une part par la fenêtre 23 occupée par l'organe obturateur 7, et d'autre part par le capuchon 24, forme avantageusement la zone de confinement 12.

Selon la seconde variante de réalisation illustrée sur les figures 5 et 6, le capuchon 24 coopère avec le corps principal 20 pour délimiter une chambre 22' qui forme une chambre d'admission du flux gazeux, laquelle se trouve en communication avec l'orifice de fuite 5 au moins lorsque le moyen de purge 4 se trouve en configuration d'ouverture, la zone de confinement 12 étant alors distincte de ladite chambre 22'.

Avantageusement, les agencements du module 50 décrits ci-dessus permettent de loger la majeure partie de ce dernier dans l'enceinte 3, la zone de confinement 12 étant située sous le couvercle 2, en vis-à-vis de l'intérieur de la cuve.

Ainsi, non seulement on limite les éléments saillants à l'extérieur de l'appareil de cuisson 1, ce qui améliore son aspect esthétique, mais surtout on expose le moyen de commande 10, et plus particulièrement l'organe d'actionnement 11, à des conditions très proches des conditions réelles régnant dans l'enceinte, en les soumettant notamment à une température qui constitue une « *image* » de la température T fidèle et peu sujette aux perturbations extérieures, ce qui garantit la fiabilité du déclenchement du moyen de purge 4.

Bien entendu, l'agencement de l'orifice de fuite 5 n'est nullement limité à une variante de réalisation particulière, dès lors que ledit orifice est convenablement orienté et dimensionné pour autoriser une certaine augmentation de pression et de température au début de la cuisson tout en permettant la fuite de l'air.

Toutefois, selon une première variante de réalisation préférentielle illustrée sur les figures 1 à 4, l'orifice de fuite 5 peut se présenter sous forme d'un collecteur comportant au moins un, et de préférence deux évents d'admission 27 permettant une admission sensiblement radiale et centripète du flux gazeux au sein du moyen de purge 4 et qui se rejoignent au droit du moyen de commande 10 pour former ensuite une bouche d'expulsion 28 sensiblement axiale.

De préférence, tel que cela est illustré sur les figures 1 à 4, le corps principal 20 peut être ajouré à cet effet par une ou plusieurs rainures sensiblement horizontales - et parallèles au couvercle - qui forment les évents d'admission 27 et couvrent chacune un secteur angulaire sensiblement compris entre 45° et 120°, et de préférence voisin de 90°. Un tel agencement simplifie avantageusement la réalisation dudit corps principal 20 par moulage.

Selon une deuxième variante de réalisation illustrée sur les figures 5 et 6, les évents d'admission 27 peuvent être agencés sensiblement parallèlement à l'axe (ZZ'), et notamment percés dans le fond du capuchon 24.

Par ailleurs, selon une caractéristique préférentielle qui peut constituer une invention à part entière, l'orifice de fuite 5 forme un siège 30 de réception de l'organe obturateur 7, et ledit organe obturateur 7 présente, en regard dudit siège 30, une surface de couverture 31 concave dont la périphérie saillante forme une lèvre 32 qui est agencée pour venir en appui étanche contre ledit siège 30 lorsque le moyen de purge 4 se trouve en configuration de fermeture.

Ainsi, lorsque l'organe obturateur 7 vient recouvrir le siège 30 pour fermer l'orifice de fuite 5, c'est la lèvre 32 qui aborde en premier la surface dudit siège et est comprimée contre ce dernier de sorte à créer, par déformation élastique, une couronne d'étanchéité circulaire qui s'adapte en tous points à la géométrie du siège.

De façon préférentielle, selon la première variante de réalisation illustrée sur les figures 3 et 4, l'organe obturateur 7 peut présenter à cet effet une section transverse sensiblement en forme de « Ω » dont le sommet présente un renfoncement qui forme la surface de couverture 31 concave.

Ainsi, tel que cela est illustré sur les figures 3 et 4, l'organe obturateur 7 forme de préférence une pièce de révolution possédant une collerette d'assise 26 large venant en appui contre l'épaulement 22A du corps principal 20, une zone intermédiaire étranglée 33 de diamètre inférieur à la collerette 26, ainsi qu'une voûte qui fait saillie verticalement à partir de ladite zone intermédiaire 33 en s'évasant pour culminer au niveau de la lèvre 32, où ladite voûte présente un diamètre supérieur à celui de la zone intermédiaire étranglée 33 mais inférieur à celui de la collerette 26.

Avantageusement, la zone intermédiaire 33 peut remplir le rôle d'une charnière élastique qui assure une véritable suspension élastique de la lèvre 32 et permet à cette dernière d'épouser parfaitement le siège 30. Pour conférer à cette zone intermédiaire 33 la souplesse nécessaire, on pourra par exemple réduire son épaisseur.

Selon une autre variante de réalisation, illustrée sur les figures 5 et 6, l'organe obturateur 7 peut se présenter sous la forme d'un joint comprenant un disque sensiblement plan ou sensiblement incurvé, dont l'une des faces forme la surface de couverture 31, ledit disque étant pourvu d'une lèvre 32 annulaire, de préférence de section transverse hémi-cylindrique, faisant saillie sur ladite surface de couverture 31. De tels mécanismes à couronne d'étanchéité sont aptes à compenser au moins en partie les imperfections de fabrication (écarts de tolérances, état de surface) ou d'assemblage (centrage, course) et permettent d'assurer efficacement l'étanchéité du moyen de purge 4 même lorsque l'obturateur est faiblement contraint en compression contre le siège, ce qui autorise notamment la mise en oeuvre d'un organe d'actionnement 11 peu puissant.

Par ailleurs, bien qu'il soit envisageable que l'organe obturateur 7 soit directement piloté par l'organe d'actionnement 11, le moyen de commande 10 comporte de préférence un piston 40 distinct de l'organe d'actionnement 11 et avantageusement monté mobile par rapport à l'orifice de fuite 5 afin d'entraîner l'organe obturateur 7 en déplacement par rapport audit orifice de fuite 5.

Selon la première variante de réalisation illustrée sur les figures 1 à 4, ledit piston 40 est disposé entre l'organe obturateur 7 et l'organe d'actionnement 11 afin d'entraîner ledit organe obturateur 7 mobile en déplacement par rapport à l'orifice de fuite 5.

Plus particulièrement, ledit piston 40 est guidé à translation, ici sensiblement verticale, de sorte à pouvoir convertir la déformation du bilame 11 qui vient prendre appui sur lui en un effort de poussée venant plaquer la lèvre 32 de l'organe obturateur 7 contre le siège 30.

Avantageusement, l'absence d'attache permanente entre l'organe d'actionnement 11 et le piston 40 limite l'usure des pièces d'entraînement de l'organe obturateur 7 en évitant notamment la fatigue du matériau sous l'action de contraintes alternées.

De surcroît, le piston 40 est avantageusement situé à l'abri dans la zone de confinement 12, de telle sorte qu'il reste inaccessible au flux gazeux, ce qui contribue à garantir la qualité de son guidage dans le temps, et notamment à éviter les phénomènes de limitation de course par encrassement ou de grippage.

Par ailleurs, le piston 40 s'étend de préférence entre un pied élargi 41, lequel coopère avec l'organe d'actionnement 11, et une tête 42 plus étroite que son pied 41, ladite tête 42 étant de préférence engagée dans le creux de l'organe obturateur 7, à l'opposé de la surface de couverture 31.

En d'autres termes, le joint en Ω formant l'organe obturateur 7 coiffe la tête 42, c'est-à-dire la portion supérieure étroite du piston 40, tandis que ledit piston 40 repose, par son pied 41, sur le bilame 11.

De préférence, selon cette première variante de réalisation, le capuchon 24, l'organe d'actionnement 11, le piston 40 et l'organe obturateur 7 sont donc empilés verticalement dans cet ordre à l'intérieur du corps principal 20.

Avantageusement, le pied 41 élargi améliore la stabilité du piston 40, ainsi que le guidage de celui-ci, en coulissant dans une rainure de guidage circulaire 43 creusée verticalement dans le capuchon 24.

Selon la seconde variante de réalisation correspondant aux figures 5 et 6, l'organe d'actionnement 11 est cette fois disposé entre l'organe obturateur 7 et le piston 40, ce dernier se trouvant donc orienté « *tête en bas* » à l'opposé du bilame 11 par rapport à l'organe obturateur 7.

La zone de confinement peut alors avantageusement être limitée à l'espace contenu entre le pied 41 du piston d'une part et l'organe obturateur 7 qui recouvre ledit pied 41 de façon étanche d'autre part, le piston 40 évoluant quant à lui au contact du flux gazeux F.

Selon cet agencement, le bilame 11 peut avantageusement se trouver au contact direct de la face de l'organe obturateur 7 non exposée au flux gazeux.

Selon cette seconde variante de réalisation, l'organe obturateur 7 et l'organe d'actionnement 11 sont avantageusement embarqués sur le piston 40 et forment ainsi avec ce dernier un sous-ensemble du genre chariot, qui est conçu pour pouvoir être animé globalement d'un même mouvement par rapport au corps principal 20 et au siège 30.

De préférence, ledit piston, ainsi que l'organe obturateur 7 et l'organe d'actionnement 11, font partie d'un même chariot, avantageusement monté à translation par rapport au corps principal 20 et au capuchon 24 selon l'axe (ZZ').

En outre, le capuchon est de préférence pourvu d'un palier de guidage 47 sur lequel la tête 42 du piston vient s'emboîter pour former un guidage télescopique.

Avantageusement, le palier 47 peut contenir un ressort de rappel 48 qui agit de façon antagoniste à l'organe d'actionnement 11, et tend plus particulièrement à rappeler le piston 40 vers le haut, afin de rapprocher l'organe obturateur de l'orifice de fuite 5 jusqu'à plaquer la lèvre 32 contre le siège 30.

Dans l'une ou l'autre des variantes de réalisation susmentionnées, la largeur importante du pied 41, qui peut être supérieure à la largeur du siège 30, permet au piston 40 de bénéficier d'un maximum de course utile, dans la mesure où la déflexion axiale du bilame, selon l'axe (ZZ'), augmente avec la longueur transverse caractéristique de ce dernier. Plus particulièrement, la variation d'encombrement vertical hors-tout dudit bilame 11 induite par une courbure donnée sera d'autant plus importante, c'est-à-dire l'effet de « *décollement* » des bords dudit bilame 11 sera d'autant plus prononcé, que ladite courbure s'appliquera à une calotte de diamètre important.

Selon une variante de réalisation particulièrement préférentielle qui peut constituer une invention à part entière, la plaque bombée bistable formant l'organe d'actionnement 11 présente deux faces d'appui, la première face d'appui 11A étant destinée à venir en appui contre, et de préférence reposant sur, un socle 44, et la seconde face d'appui 11 B venant au contact du pied 41 du piston 40.

Selon la première variante de réalisation illustrée sur les figures 3 et 4, le socle est lié au capuchon 24, et de préférence venu de matière avec ce dernier.

De préférence, la surface dudit socle 44 présente alors une forme, et plus particulièrement une courbure, sensiblement conjuguée à celle de la première face d'appui 11A lorsque le moyen de purge 4 se trouve en configuration d'ouverture et que ladite plaque bombée est au repos.

Par ailleurs, la surface du pied 41 du piston 40, présente de préférence une forme, et plus particulièrement une courbure, sensiblement conjuguée à celle de la seconde face d'appui 11 B lorsque le moyen de purge 4 se trouve en configuration d'ouverture et que ladite plaque bombée est au repos.

De façon particulièrement préférentielle, la plaque bombée présente une épaisseur sensiblement constante, de telle sorte que les courbures au repos de sa première face d'appui 11A, de sa seconde face d'appui 11 B, du socle 44 et de la tête 41 du piston 40 sont sensiblement égales.

Avantageusement, le recours à des surfaces d'appui indéformables incurvées, et sensiblement conjuguées à la forme au repos de l'organe d'actionnement 11, permet de maximiser l'amplitude du mouvement effectué par le piston 40, et par conséquent la course utile de l'organe obturateur 7, lors de la déflexion de la plaque bombée.

En particulier, cette géométrie spécifique permet d'augmenter la course utile du piston par rapport à un socle et/ou un piston qui présenteraient des surfaces de contact planes.

En effet, tel que cela est illustré sur la figure 4, lorsque l'organe d'actionnement 11 est activé, c'est-à-dire qu'il passe d'une configuration de repos concave à une configuration active convexe, son point bas correspondant au fond de la coupelle vient en appui sur le sommet 45 du dôme que forme le socle 44, tandis que sa périphérie vient en opposition contre la partie basse de l'arche 46 formée par le pied 41 du piston 40.

Le bilame activé se trouve donc en double opposition de courbure par rapport au socle 44 d'une part et au piston 40 d'autre part, ce qui permet ainsi d'affecter la quasi-totalité de la hauteur hors-tout dudit bilame, c'est-à-dire son encombrement selon l'axe (ZZ') sur la figure 4, à la séparation du point haut du socle et du point bas du piston.

En pratique, un tel agencement permet de générer un déplacement du piston proche du double de la concavité de l'organe d'actionnement 11, la distance séparant alors la surface du socle 44 de la surface du pied 41 du piston 40 étant sensiblement égale à la somme de l'épaisseur e du bilame, de la concavité de déflexion d₁₁ du bilame et de la concavité d₄₁ de l'arche 46 formée par le pied 41 du piston.

Bien entendu, ce concept inventif concerne plus globalement tout appareil de cuisson d'aliments sous pression comportant un moyen de mise en communication de son enceinte avec l'extérieur, et notamment un moyen de régulation de type soupape, un moyen de sécurité contre les surpressions, ou un moyen de purge d'air, ledit moyen de mise en communication étant conçu pour passer alternativement d'un état d'ouverture dans lequel il met en communication l'enceinte 3 avec l'extérieur de l'appareil à un état de fermeture dans lequel il assure l'étanchéité de l'enceinte, sous la dépendance d'un moyen de commande 10 comprenant au moins un premier élément, du genre socle 44, et un second élément, du genre piston 40, solides et susceptibles d'être déplacés l'un par rapport à l'autre, et notamment éloignés l'un de l'autre, par un organe d'actionnement 11, du genre bilame, ledit organe d'actionnement étant conçu pour passer d'un premier état dit « *de repos* », dans lequel il présente une première face d'appui 11A et d'une seconde face d'appui 11 B bombées possédant globalement des courbures de même signe entre elles et de même signe que les surfaces respectives du premier et du second élément 44, 41 contre lesquelles elles viennent respectivement en appui, à un second état dit « *activé* » dans lequel ledit organe d'actionnement inverse le signe de courbure de ses première et seconde surfaces d'appui de sorte à les placer en opposition de courbure à l'encontre du premier et du second élément.

Par ailleurs, de façon particulièrement avantageuse, le fait que le bilame, lorsqu'il se trouve au repos, épouse sensiblement le socle 44, et plus particulièrement qu'il soit au contact direct dudit socle 44 sur la quasi-totalité de sa première face d'appui 11A, garantit un transfert de chaleur direct et efficace entre ledit socle 44 et ledit bilame. Le bilame percevant ainsi fidèlement et relativement rapidement l'image de la température T régnant dans l'enceinte, on évite tout aléa ou retard dans son déclenchement.

Selon la seconde variante de réalisation correspondant aux figures 5 et 6, le socle 44 est formé par un pointeau faisant saillie hors de l'orifice de fuite 5 à l'encontre de l'organe obturateur 7, de préférence sensiblement au centre de ce dernier.

De préférence, ledit pointeau présente un diamètre inférieur à celui du bilame 11.

Lorsque le bilame 11 est au repos à une température inférieure au seuil de déclenchement prédéterminé T₁, tel que cela est illustré sur la figure 5, celui-ci présente une forme concave de telle sorte que le sommet de sa première face d'appui 11A vient en opposition, par l'intermédiaire de l'organe obturateur 7, sur ledit pointeau 44, tandis que le pourtour de sa seconde face d'appui 11B vient en opposition contre l'arche 46 du pied 41 du piston, qui présente une courbure opposée.

Ledit bilame 11 maintient alors le piston 40, ainsi que la lèvre 32 de l'organe obturateur 7, à distance du siège 30, laissant ainsi le flux gazeux F s'échapper par l'orifice de fuite 5.

Avantageusement, la structure du module 50 conforme à la seconde variante de réalisation, et en particulier l'utilisation d'un bilame 11 écarteur qui forme une sorte d'entretoise sensiblement rigide entre le siège 30 et le piston 40, ainsi que la mise en oeuvre d'un piston 40 rigide et guidé, apte à renforcer au moins en partie ledit organe obturateur 7 notamment au niveau de la lèvre 32, permettent d'assurer un maintien particulièrement stable dudit organe obturateur 7 à distance dudit siège 30.

Un tel agencement peut notamment améliorer la tenue mécanique de l'organe obturateur 7 en configuration d'ouverture vis-à-vis d'une déformation élastique ou d'une modification de son assiette, et ainsi contribuer à prévenir tout phénomène d'obturation intempestive.

Par ailleurs, lorsque le bilame 11 est activé et inverse sa courbure, sa seconde face d'appui 11 B vient sensiblement épouser la surface de l'arche 46 et libére ainsi le piston 40 sur une course suffisante pour que celui-ci, propulsé par le ressort de rappel 48, vienne plaquer la lèvre 32 contre le siège et ainsi obturer l'orifice de fuite 5. Concomitamment, cette activation du bilame dégage suffisamment d'espace pour que le pointeau vienne se loger au creux dudit bilame, au contact ou à distance de la partie centrale de l'organe obturateur qui épouse de préférence sensiblement la courbure dudit bilame 11, sans s'opposer à cette mise en contact étanche.

De même que précédemment, cette variante permet d'optimiser l'amplitude du mouvement accompli et autorisé par le changement d'état du bilame 11 en utilisant l'opposition de courbure des éléments constitutifs du moyen de commande 10.

En outre, le nombre réduit de pièces mises en jeu par un tel moyen de commande 10 permet un contrôle du changement de configuration et un maintien quasi-direct de l'organe obturateur 7, selon une chaîne de cotes simplifiée.

Bien entendu, la présente invention concerne également en tant que tel le module 50 comprenant un moyen de purge 4 conforme à l'invention ainsi qu'un moyen de commande 10 tel que décrit précédemment, ledit module pouvant être monté sur le couvercle d'un appareil de cuisson sous pression.

Avantageusement, un tel module 50 peut être aisément rapporté, par exemple par clippage, sur tout type d'appareil de cuisson sous pression, et notamment remplacer d'anciens dispositifs de purge d'air défectueux.

Bien entendu, l'utilisation d'un tel module 50 n'est nullement limitée.

En particulier, il est envisageable d'adapter ledit module 50 non seulement à un autocuiseur domestique, mais également à tout type de récipient destiné à contenir un fluide sous pression, et notamment de la vapeur d'eau, tel que par exemple un stérilisateur ou un autoclave.

Le fonctionnement d'un appareil de cuisson 1 conforme à l'invention va maintenant être décrit en référence à la première variante de réalisation illustrée aux figures 3 et 4, et à la seconde variante de réalisation correspondant aux figures 5 et 6 respectivement.

Après avoir disposé les aliments dans la cuve, l'utilisateur place et verrouille le couvercle 2 sur cette dernière.

L'enceinte 3 se trouve alors sensiblement à pression et température atmosphériques P₀, T₀.

Le moyen de purge 4 se trouve en configuration d'ouverture tel que cela est illustré sur la figure 3, respectivement sur la figure 5.

L'utilisateur place ensuite l'appareil 1 sur une source de chauffe de telle sorte que la température T qui règne à l'intérieur de l'enceinte s'élève progressivement.

Ce faisant, l'air contenu dans la cuve s'échappe à travers le couvercle via le moyen de purge 4 ouvert.

Plus précisément, le flux gazeux F gagne le moyen de purge 4, s'engage dans le corps principal 20 par les évents 27, puis s'écoule le long du siège 30, entre ledit siège et l'organe obturateur 7 placé en retrait de celui-ci, avant de poursuivre son chemin à travers l'orifice de fuite 5 jusqu'à déboucher à l'extérieur 6 de l'appareil 1 à travers la bouche d'expulsion 28.

Avantageusement, le flux gazeux circulant à travers l'orifice de fuite est en permanence séparé du moyen d'actionnement 11, lequel est logé à l'abri dans la zone de confinement 12, de telle sorte que ledit flux gazeux F n'entre jamais en contact avec le bilame 11, ni avec le piston 40 sur la première variante.

Avantageusement, la section de passage de l'orifice de fuite 5, et en particulier l'interstice ménagé entre la lèvre 32 de l'organe obturateur 7 et le siège 30 sont calibrés de telle sorte que le débit de fuite autorise l'évacuation progressive de l'air tout en permettant malgré tout une légère montée en température et en pression au sein de l'enceinte 3, ladite montée contribuant à chasser efficacement l'air.

La chaleur régnant dans l'enceinte est communiquée au bilame par conduction, via le capuchon sur lequel il repose.

Tant que la température T régnant dans l'enceinte reste inférieure au seuil de déclenchement T₁ de l'organe d'actionnement 11, le moyen de purge 4 reste ouvert et l'air s'échappe de la cuve, ce qui permet au mélange gazeux restant de monter en température. En revanche, sitôt le seuil de déclenchement atteint, le bilame 11 bascule de son état de repos illustré à la figure 3 à son état actif illustré à la figure 4.

Plus particulièrement, l'effet « *cloquant* » de la plaque bombée est avantageusement thermo-activé par le franchissement du seuil de déclenchement. En d'autres termes, l'élévation de la température de ladite plaque bombée fait apparaître et augmenter au sein de cette dernière des contraintes internes qui, lorsqu'elles dépassent un seuil d'inversion prédéterminé, lequel dépend de la géométrie et de la concavité de ladite plaque au repos, provoquent quasi-instantanément l'inversion sensible de sa courbure, faisant passer ladite plaque d'une forme concave à une forme convexe.

Ce faisant, sur la première variante de réalisation, ladite plaque bombée 11 prend appui, sensiblement au centre de sa première face d'appui 11A, sur le socle 44, tandis qu'elle repousse le piston 40 en direction du siège 30, en exerçant un effort sensiblement axial contre le pied 41 dudit piston par l'intermédiaire de la zone périphérique de sa seconde face d'appui 11 B.

Le piston 40 est donc poussé en translation, ici verticale ascendante, par rapport au corps principal 20, lui-même fixé au couvercle, et entraîne dans son déplacement l'organe obturateur 7.

Ce faisant, l'organe obturateur 7 subit une déformation élastique réversible, notamment au niveau de sa zone intermédiaire étranglée 33, de telle sorte que la surface de couverture concave 31 se rapproche du siège 30 jusqu'à ce que la lèvre 32 vienne s'écraser contre la surface dudit siège 30 en obturant ainsi l'orifice de fuite 5, tel que cela est illustré sur la figure 4.

Le bilame 11 a donc ici un rôle actif de fermeture, en formant l'organe moteur du déplacement et du maintien du piston et de l'organe obturateur 7 en position de fermeture.

A l'inverse, sur la seconde variante de réalisation, le changement d'état du bilame supprime la résistance opposée au ressort de rappel 48 qui repousse alors le piston 40 en translation ascendante, jusqu'à ce que ce dernier amène la lèvre 32 en butée contre le siège 30.

Le bilame 11 joue donc ici un rôle passif, formant obstacle, tant que le seuil de température n'est pas atteint, au déclenchement de l'organe de commande 10 qui est précontraint vers la position de fermeture.

Avantageusement, dans l'un et l'autre cas, l'activation de l'organe d'actionnement 11, c'est-à-dire son changement d'état, permet au moyen de commande 10 de manoeuvrer automatiquement l'organe obturateur 7.

Dès lors, le moyen de purge 4 se trouve en configuration de fermeture étanche et empêche les gaz contenus dans l'enceinte de s'échapper vers l'extérieur.

La chauffe se poursuivant, la température et la pression régnant dans l'enceinte T, P, augmentent progressivement, avantageusement selon une évolution proche de la loi de Zeuner, du fait que l'air a été sensiblement purgé de l'enceinte, et ce jusqu'à atteindre les valeurs de fonctionnement de l'appareil T₂, P₂, lesquelles sont avantageusement régulées par un dispositif idoine.

Une fois la cuisson terminée, la source de chauffe est éteinte, et l'enceinte refroidie et/ou purgée du gaz qu'elle contient.

Lorsque la température régnant dans l'enceinte redescend sous un seuil de réinitialisation, de préférence choisi inférieur au seuil de déclenchement T1, le moyen de purge revient dans sa configuration d'ouverture.

Plus particulièrement, selon la première variante, le bilame bascule de son état actif à son état de repos, c'est-à-dire retrouve sa forme concave initiale et libère le piston 40.

Le piston 40, qui n'est alors plus soutenu par ledit bilame, s'éloigne ainsi du siège 30 en redescendant sous l'effet conjugué de son poids et de l'effort de rappel élastique créé par la déformation de l'organe obturateur 7.

Dans le cas de la seconde variante, le bilame 11 repousse le piston 40 à l'encontre du ressort de rappel 48.

Dans l'un ou l'autre cas, ceci a pour effet de décoller la lèvre 32 du siège 30, et ainsi d'ouvrir de nouveau le moyen de purge 4.

L'appareil 1 est alors disponible pour une nouvelle utilisation.

Avantageusement, le seuil de réinitialisation peut être défini par construction du moyen d'actionnement 11, et plus particulièrement par le choix et l'épaisseur des matériaux constitutifs du bilame. En pratique, ledit seuil de réinitialisation pourra être situé environ 30°C sous le seuil de déclenchement T₁.

Ainsi, le module 50 conforme à l'invention permet avantageusement d'améliorer les performances de l'appareil de cuisson sous pression 1, notamment sur le plan énergétique, en accélérant et en homogénéisant la montée en température et en pression en début de cuisson.

En outre, ledit module 50 et ledit appareil 1 présentent avantageusement une structure particulièrement simple et compacte qui contribue à limiter le coût de fabrication de l'appareil 1, mais également à en améliorer l'aspect esthétique.

Enfin, la conception de l'appareil 1 conforme à l'invention permet de préserver durablement l'intégrité et le fonctionnement du moyen de purge 4 et du moyen de commande 10 qui lui sont associés, ce qui lui garantit sa fiabilité et sa longévité.

## Revendications

1. - Appareil de cuisson (1) d'aliments sous pression comprenant une cuve ainsi qu'un couvercle (2) conçu pour être fixé sur ladite cuve de sorte à définir une enceinte (3) sensiblement étanche destinée à contenir les aliments, ledit appareil étant pourvu :
- d'un moyen de purge (4) permettant l'évacuation de l'air hors de l'enceinte au début de la cuisson, ledit moyen de purge comprenant un orifice de fuite (5) reliant l'intérieur de l'enceinte (3) à l'extérieur (6) de l'appareil ainsi qu'un organe obturateur (7) coopérant avec ledit orifice de fuite (5) pour permettre au moyen de purge (4) d'adopter alternativement une configuration d'ouverture, dans laquelle il assure la communication entre l'intérieur de l'enceinte (3) et l'extérieur (6) de l'appareil et autorise la fuite d'un flux gazeux (F) en provenance de ladite enceinte, et une configuration de fermeture dans laquelle il assure l'étanchéité de l'enceinte (3),
- d'un moyen de commande (10) conçu pour faire passer le moyen de purge (4) de sa configuration d'ouverture à sa configuration de fermeture lorsque la température (T) ou la pression (P) régnant dans l'enceinte s'élève au-delà d'un seuil de déclenchement prédéterminé (T₁, P₁),
ledit appareil étant **caractérisé en ce que** le moyen de commande (10) comporte un organe d'actionnement (11) solide qui est logé dans une zone de confinement (12) sensiblement étanche apte à isoler ledit organe d'actionnement (11) du flux gazeux (F) provenant de l'enceinte (3).

2. - Appareil de cuisson selon la revendication 1 **caractérisé en ce que** l'organe d'actionnement (11) solide est formé par un bilame.

3. - Appareil de cuisson selon la revendication 1 ou 2 **caractérisé en ce que** l'organe obturateur (7) forme une paroi étanche qui délimite au moins en partie la zone de confinement (12).

4. - Appareil de cuisson selon la revendication 3 **caractérisé en ce que** l'organe obturateur (7) est formé par une membrane élastique.

5. - Appareil de cuisson selon l'une des revendications 3 ou 4 **caractérisé en ce que** le moyen de purge (4) comporte un corps principal (20) dans lequel est percé l'orifice de fuite (5), ledit corps principal présentant une chambre (22) contiguë à l'orifice de fuite (5) et s'ouvrant sur ce dernier par une fenêtre (23), ladite chambre présentant au niveau de ladite fenêtre (23) un épaulement (22A) contre lequel l'organe obturateur (7) est rapporté et maintenu de manière étanche par un capuchon (24) fixé sur ledit corps principal (20), de telle sorte que l'intérieur de ladite chambre (22) forme la zone de confinement (12).

6. - Appareil de cuisson selon l'une des revendications précédentes **caractérisé en ce que** la zone de confinement (12) est située sous le couvercle (2), en vis-à-vis de l'intérieur de la cuve.

7. - Appareil de cuisson selon l'une des revendications précédentes **caractérisé en ce que** l'orifice de fuite (5) forme un siège (30) de réception de l'organe obturateur (7) et **en ce que** ledit organe obturateur (7) présente, en regard dudit siège (30), une surface de couverture (31) concave dont la périphérie saillante forme une lèvre (32) agencée pour venir en appui étanche contre ledit siège (30) lorsque le moyen de purge se trouve en configuration de fermeture.

8. - Appareil de cuisson selon la revendication 7 **caractérisé en ce que** l'organe obturateur (7) présente une section transverse sensiblement en forme de « Ω » dont le sommet présente un renfoncement formant la surface de couverture concave (31).

9. - Appareil de cuisson selon l'une des revendications précédentes **caractérisé en ce que** le moyen de commande comporte un piston (40) distinct de l'organe d'actionnement (11) et monté mobile par rapport à l'orifice de fuite (5) afin d'entraîner ledit organe obturateur (7) en déplacement par rapport audit orifice de fuite (5).

10. -Appareil de cuisson selon la revendication 9 **caractérisé en ce que** le piston (40) s'étend entre un pied (41) élargi coopérant avec l'organe d'actionnement (11) et une tête (42) plus étroite que son pied (41).

11. -Appareil de cuisson selon les revendications 8 et 10 **caractérisé en ce que** le piston (40) est disposé entre l'organe obturateur (7) et l'organe d'actionnement (11), la tête (42) dudit piston (40) étant engagée dans le creux de l'organe obturateur (7), à l'opposé de la surface de couverture (31).

12. -Appareil de cuisson selon la revendication 9 ou 10 **caractérisé en ce que** l'organe d'actionnement (11) est disposé entre l'organe obturateur (7) et le piston (40).

13. -Appareil de cuisson selon l'une des revendications précédentes **caractérisé en ce que** l'organe d'actionnement (11) se présente sous la forme d'une plaque bombée bistable dont la courbure s'inverse sensiblement lors du franchissement du seuil de déclenchement (T₁, P₁).

14. -Appareil de cuisson selon la revendication 13 et l'une des revendications 9 à 12 **caractérisé en ce que** la plaque bombée bistable présente deux faces d'appui, la première face d'appui (11A) destinée à venir en appui contre un socle (44) et la seconde face d'appui (11 B) venant au contact du pied (41) du piston (40), et **en ce que** la surface dudit socle (44) et/ou la surface du pied (41) du piston présentent une courbure sensiblement conjuguée à celle de la première face d'appui (11A), respectivement de la seconde face d'appui (11 B), lorsque le moyen de purge (4) se trouve en configuration d'ouverture et que ladite plaque bombée est au repos.

15. -Appareil de cuisson selon les revendications 12 et 14 **caractérisé en ce que** le socle (44) est formé par un pointeau faisant saillie hors de l'orifice de fuite (5) à l'encontre de l'organe obturateur (7).

## Claims

1. A cooking utensil (1) for cooking food under pressure, the utensil comprising a vessel and a lid (2) designed to be fastened on said vessel so as to define a substantially leaktight enclosure (3) for containing the food, said utensil being provided with:
- bleed means (4) enabling air to be discharged from the enclosure at the beginning of cooking, said bleed means including a leak orifice (5) connecting the inside of the enclosure (3) to the outside (6) of the utensil, together with a shutter member (7) co-operating with said leak orifice (5) to enable the bleed means (4) to alternate between an open configuration in which they provide communication between the inside of the enclosure (3) and the outside (6) of the utensil and allow a gaseous stream (F) to leak out from said enclosure, and a closed configuration in which they seal the enclosure (3); and control means (10) designed to cause the bleed means (4) to pass from their open configuration to their closed configuration when the temperature (T) or the pressure (P) within the enclosure rises above a predetermined trigger threshold (T₁, P₁);
said utensil being **characterized in that** the control means (10) comprise a solid actuator member (11) that is housed in a substantially leaktight confinement zone (12) suitable for isolating said actuator member (11) from the gaseous stream (F) coming from the enclosure (3).

2. A cooking utensil according to claim 1, **characterized in that** the solid actuator member (11) is formed by a thermal switch.

3. A cooking utensil according to claim 1 or claim 2, **characterized in that** the shutter member (7) forms a leakproof wall that defines at least part of the confinement zone (12).

4. A cooking utensil according to claim 3, **characterized in that** the shutter member (7) is formed by a resilient diaphragm.

5. A cooking utensil according to claim 3 or claim 4, **characterized in that** the bleed means (4) comprise a main body (20) having the leak orifice (5) pierced therein, said main body presenting a chamber (22) contiguous with the leak orifice (5) and opening thereto via a window (23), said chamber presenting a shoulder (22A) at said window (23), against which shoulder the shutter member (7) is fitted and held in leaktight manner by a cap (24) fastened to said main body (20) in such a manner that the inside of said chamber (22) forms the confinement zone (12).

6. A cooking utensil according to any preceding claim, **characterized in that** the confinement zone (12) is situated under the lid (2), facing the inside of the vessel.

7. A cooking utensil according to any preceding claim, **characterized in that** the leak orifice (5) forms a seat (30) for receiving the shutter member (7), and **in that** said shutter member (7) presents, facing said seat (30), a concave covering surface (31) with a projecting periphery forming a lip (32) arranged to bear in leaktight manner against said seat (30) when the bleed means are in the closed position.

8. A cooking utensil according to claim 7, **characterized in that** the shutter member (7) presents a cross-section that is substantially Ω-shaped, with the top thereof presenting a setback forming the concave covering surface (31).

9. A cooking utensil according to any preceding claim, **characterized in that** the control means include a piston (40) distinct from the actuator member (11) and mounted to move relative to the leak orifice (5) so as to drive said shutter member (7) to move relative to said leak orifice (5).

10. A cooking utensil according to claim 9, **characterized in that** the piston (40) extends between an enlarged base (41) co-operating with the actuator member (11) and a head (42) that is narrower than the base (41).

11. A cooking utensil according to claims 8 and 10, **characterized in that** the piston (40) is located between the shutter member (7) and the actuator member (11), the head (42) of said piston (40) being engaged in the hollow of the shutter member (7) opposite from the covering surface (31).

12. A cooking utensil according to claim 9 or claim 10, **characterized in that** the actuator member (11) is disposed between the shutter member (7) and the piston (40).

13. A cooking utensil according to any preceding claim, **characterized in that** the actuator member (11) is in the form of a bistable dished plate of curvature that substantially inverses when the trigger threshold (T₁, P₁) is crossed.

14. A cooking utensil according to claim 13 and any one of claims 9 to 12, **characterized in that** the bistable dished plate presents two thrust faces, the first thrust face (11A) being designed to bear against a plinth (44) and the second thrust face (11B) coming into contact with the base (41) of the piston (40), and **in that** the surface of said plinth (44) and/or the surface of the base (41) of the piston presents curvature substantially complementary to the curvatures respectively of the first thrust face (11A) and of the second thrust face (11B) when the bleed means (4) are in the open configuration and said dished plate is at rest.

15. A cooking utensil according to claims 12 and 14, **characterized in that** the plinth (44) is formed by a stud projecting from the leak orifice (5) against the shutter member (7).

## Patentansprüche

1. Druckgargerät (1) für Nahrungsmittel, das einen Behälter sowie einen Deckel (2) aufweist, der konzipiert ist, um an dem Behälter derart befestigt zu werden, dass ein Einschluss (3), der im Wesentlichen dicht ist, definiert wird, der dazu bestimmt ist, die Nahrungsmittel zu enthalten, wobei das Gerät mit Folgendem versehen ist:
- einem Entlüftungsmittel (4), das das Ableiten der Luft aus dem Einschluss heraus zu Beginn des Garens gestattet, wobei das Entlüftungsmittel eine Lecköffnung (5) aufweist, die das Innere des Einschlusses (3) mit der Außenseite (6) des Geräts verbindet, sowie ein Verschlussorgan (7), das mit der Lecköffnung (5) zusammenwirkt, um es dem Entlüftungsmittel (4) zu gestatten, alternativ eine Öffnungskonfiguration, in der es die Kommunikation zwischen dem Inneren des Einschlusses (3) und dem Äußeren (6) des Geräts sicherstellt und das Lecken eines gasförmigen Stroms (F) der aus dem Einschluss stammt, erlaubt, und eine Schließkonfiguration, in der es die Abdichtung des Einschlusses (3) sicherstellt, anzunehmen,
- ein Steuermittel (10), das konzipiert ist, um das Entlüftungsmittel (4) von seiner Öffnungskonfiguration zu seiner Schließkonfiguration übergeben zu lassen, wenn die Temperatur (T) oder der Druck (P), die in dem Einschluss herrschen, über einen vorbestimmten Auslöseschwellenwert (T₁, P₁) steigen,
wobei das Gerät **dadurch gekennzeichnet ist, dass** das Steuermittel (10) ein festes Betätigungsorgan (11) aufweist, das in einem Einschlussbereich (12), der im Wesentlichen dicht ist, der das Betätigungsorgan (11) von dem gasförmigen Strom (F), der von dem Einschluss stammt (3), isolieren kann, untergebracht ist.

2. Gargerät nach Anspruch 1, **dadurch gekennzeichnet, dass** das feste Betätigungsorgan (11) aus einem Bimetallstreifen besteht.

3. Gargerät nach Anspruch 1 oder 2, **dadurch gekennzeichnet, dass** das Verschlussorgan (7) eine dichte Wand bildet, die mindestens einen Teil der Einschlusszone (12) abgrenzt.

4. Gargerät nach Anspruch 3, **dadurch gekennzeichnet, dass** das Verschlussorgan (7) aus einer elastischen Membran besteht.

5. Gargerät nach einem der Ansprüche 3 oder 4, **dadurch gekennzeichnet, dass** das Entlüftungsmittel (4) einen Hauptkörper (20) aufweist, in den die Lecköffnung (5) gebohrt ist, wobei der Hauptkörper eine Kammer (22) aufweist, die neben der Lecköffnung liegt (5) und sich auf diese Letztere durch ein Fenster (23) öffnet, wobei die Kammer auf dem Niveau des Fensters (23) einen Ansatz (22A) aufweist, gegen welchen das Verschlussorgan (7) angebaut ist und dicht von einer Kappe (24), die auf dem Hauptkörper (20) befestigt ist, derart gehalten wird, dass das Innere der Kammer (22) die Einschlusszone (12) bildet.

6. Gargerät nach einem der vorhergehenden Ansprüche, **dadurch gekennzeichnet, dass** die Einschlusszone (12) unter dem Deckel (2) dem Inneren des Behälters gegenüberliegend liegt.

7. Gargerät nach einem der vorhergehenden Ansprüche,
**dadurch gekennzeichnet, dass** die Lecköffnung (5) einen Aufnahmesitz (30) des Verschlussorgans (7) bildet, und dass das Verschlussorgan (7) gegenüber dem Sitz (30) eine konkave Deckungsfläche (31) aufweist, deren vorspringende Peripherie eine Lippe (32) bildet, die eingerichtet ist, um gegen den Sitz (30) zum dichten Aufliegen zu kommen, wenn sich das Entlüftungsmittel in Verschlusskonfiguration befindet.

8. Gargerät nach Anspruch 7, **dadurch gekennzeichnet dass** das Verschlussorgan (7) einen Querschnitt im Wesentlichen in "Ω"-Form aufweist, dessen Scheitel einen Rücksprung aufweist, der die konkave Deckungsfläche (31) bildet.

9. Gargerät nach einem der vorhergehenden Ansprüche, **dadurch gekennzeichnet, dass** das Steuermittel einen Kolben (40) aufweist, der von dem Betätigungsorgan (11) getrennt ist und in Bezug zu der Lecköffnung (5) beweglich montiert ist, um das Verschlussorgan (7) in Verlagerung in Bezug zu der Lecköffnung (5) mitzunehmen.

10. Gargerät nach Anspruch 9, **dadurch gekennzeichnet, dass** sich der Kolben (40) zwischen einem verbreiterten Fuß (41), der mit dem Betätigungsorgan (11) zusammenwirkt, und einem Kopf (42), der schmaler ist als sein Fuß (41), erstreckt.

11. Gargerät nach den Ansprüchen 8 und 10, **dadurch gekennzeichnet, dass** der Kolben (40) zwischen dem Verschlussorgan (7) und dem Betätigungsorgan (11) angeordnet ist, wobei der Kopf (42) des Kolbens (40) in der Vertiefung des Verschlussorgans (7) der Öffnungsfläche (31) entgegengesetzt eingefügt ist.

12. Gargerät nach Anspruch 9 oder 10, **dadurch gekennzeichnet, dass** das Betätigungsorgan (11) zwischen dem Verschlussorgan (7) und dem Kolben (40) angeordnet ist.

13. Gargerät nach einem der vorhergehenden Ansprüche, **dadurch gekennzeichnet, dass** das Betätigungsorgan (11) die Form einer gewölbten bistabilen Platte aufweist, deren Krümmung sich beim Überschreiten der Auslöseschwelle (T₁, P₁) im Wesentlichen umkehrt.

14. Gargerät nach Anspruch 13 und einem der Ansprüche 9 bis 12, **dadurch gekennzeichnet, dass** die gewölbte bistabile Platte zwei Auflageflächen aufweist, wobei die erste Auflagefläche (11A) dazu bestimmt ist, gegen einen Sockel (44) zum Aufliegen zu kommen, und die zweite Auflagefläche (11B) mit dem Fuß (41) des Kolbens (40) in Berührung kommt, und dass die Fläche des Sockels (44) und/oder die Fläche des Fußes (41) des Kolbens eine Krümmung aufweist, die im Wesentlichen mit der der ersten Auflagefläche (11A) beziehungsweise der zweiten Auflagefläche (11B) konjugiert ist, wenn sich das Entlüftungsmittel (4) in Öffnungskonfiguration befindet und die gewölbte Platte in Ruhestellung ist.

15. Gargerät nach den Ansprüchen 12 und 14, **dadurch gekennzeichnet, dass** der Sockel (44) aus einem Stift besteht, der aus der Lecköffnung (5) gegen das Verschlussorgan (7) hin vorsteht.
